(19) Europäisches Patentamt
European Patent Office
Office européen des brevets

(11) **EP 1 971 060 A1**

(12) **EUROPÄISCHE PATENTANMELDUNG**
veröffentlicht nach Art. 158 Abs. 3 EPÜ

(43) Veröffentlichungstag:
**17.09.2008   Patentblatt 2008/38**

(51) Int Cl.:
***H04J 14/02*** *(2006.01)*

(21) Anmeldenummer: 05857412.0

(22) Anmeldetag: **29.11.2005**

(86) Internationale Anmeldenummer:
**PCT/RU2005/000611**

(87) Internationale Veröffentlichungsnummer:
**WO 2007/064242 (07.06.2007 Gazette 2007/23)**

(84) Benannte Vertragsstaaten:
**DE FR GB**

(71) Anmelder:
• **Gosudarstvennoe Uchrezhdenie Federalnoe Agentstvo**
**Po Pravovoi Zaschite Rezulatatov Intellektualnoi Deyatelnosti Voennogo, Spetsialnogo I Dvoinogo Moscow, 109028 (RU)**
• **Zakritoe Aktzionernoe Obschestvo "Tsentr "Vospil"**
**Moscow 117393 (RU)**

• **Sacharov, Vyacheslav K.**
**Moscow 113587 (RU)**

(72) Erfinder: **SAKHAROV, Vyacheslav Konstantinovich**
**Moscow 113587 (RU)**

(74) Vertreter: **Sloboshanin, Sergej et al**
**V. Füner, Ebbinghaus, Finck, Hano Mariahilfplatz 3**
**81541 München (DE)**

(54) **STEUERBARER OPTISCHER MULTIPLEXER**

(57)     Steuerbarer optischer Multiplexer (60) zum gesteuerten Multiplexieren von Bahnen in einem faseroptischen Kommunikationssystem mit spektraler Verdichtung von $2^N$ Bahnen, deren optische Frequenzen bei einem konstanten Spektralintervall zwischen benachbarten Bahnen $\Delta\nu$ geändert werden können, mit einer vielstufigen Struktur der Filter [(61-1),..., (61-4), (62-1), (62-2); 63], welche Elemente zur gesteuerten Änderung der Transmissionsfaktoren aufweisen. Als optische Filter werden asymmetrische Mach-Zehnder-Interferometer verwendet: einkaskadige [(61-1) ÷ (61-4)], zweikaskadige [(62-1), (62-2)], multikaskadige (63). Zur gesteuerten Änderung der Transmissionsfaktoren der optischen Filter dienen elektro- oder thermooptische Phasenverschiebungsvorrichtungen. Der Multiplexer kann in integraloptischer Technologie in Form einer monolithischen Festkörpervorrichtung ausgeführt sein.

Fig. 6

**Beschreibung**

**Technisches Gebiet**

Die Erfindung betrifft faseroptische Kommunikationssysteme (im Folgenden FK genannt) mit Spektralverdichtung der Bahnen, insbesondere steuerbare optische Multiplexer-Vorrichtungen, und kann in Systemen starker Spektralverdichtung (im Folgenden DWDM genannt) und moderater Spektralverdichtung (im Folgenden CWDM genannt) verwendet werden.

**Stand der Technik**

Die Technologien der Spektralverdichtung, die moderne Ansätze nutzen, ermöglichen die Erfüllung bestehender Anforderungen an die Leitungskapazität der FKs. Um neue und immer höhere Anforderungen seitens der Kommunikationssystementwickler zu erfüllen, ist trotzdem eine weitere Vervollkommnung und Erweiterung der genutzten technischen Mittel erforderlich. Eine der Entwicklungsrichtungen der Spektralverdichtungstechnologien ist mit der Nutzung eines Ansatzes verbunden, bei dem die Trägerfrequenzen der Bahnen dynamisch verändert werden.

Bekannt und bereits in Gebrauch sind in einem breiten Spektralbereich veränderbare Vorrichtungen, nämlich Laserdioden, sowie steuerbare optische Eingangs-/Ausgangs-Multiplexer. Für Kommunikationssysteme mit Spektralverdichtung der Bahnen sind auch optische Multiplexer mit veränderbaren optischen Trägerbahnen erforderlich (im Folgenden steuerbare optische Multiplexer genannt).

Steuerbare optische Multiplexer können in ihrer Grundfunktion als Vorrichtung zur Bündelung und Einführung von Bahnen in einen optischen Trakt verwendet werden. Sie können auch Teil komplizierterer Vorrichtungen und Systeme der Spektralverdichtung mit dynamischer Funktionalität sein, z.B. von steuerbaren Mehrbahn-Eingangs-/Ausgangs-Multiplexern.

Steuerbare optische Multiplexer können auch Mehrbahn-Transmittersystemen, in analogen optischen Systemen für verschiedene Zwecke, für eine optische Filterung und zu anderen Zwecken Verwendung finden.

Zum gegenwärtigen Zeitpunkt sind optische Multiplexer verschiedenster Art entwickelt und genutzt worden. Dies sind Multiplexer mit mehrstufigen Strukturen und mit Interferenzfiltern oder Beugungsgittern, Multiplexer in planer Ausführung mit so genannten Wellenleiterarraygittern (AWG) und schließlich, als nächstgelegener Stand der Technik, mehrstufige baumartige Strukturen auf der Grundlage asymmetrischer Mach-Zehnder-Interferometer (MZI).

Es ist bekannt, dass MZI sich durch geringe optische Verluste auszeichnen und eine geringe Polarisierungsabhängigkeit haben. Die Struktur der MZI mit einer Stufenzahl von 8-9 zeichnet sich durch eine hohe Selektivität aus und ist in der Lage, das gesamte Spektralband abzudecken, das in Spektralverdichtungssystemen verwendet wird.

Eine bekannte herkömmliche Konstruktion eines Multiplexers mit MZI, die für eine Nutzung in faseroptischen Kommunikationssystemen mit Spektralverdichtung von $2^N$ Bahnen und Frequenzintervall zwischen benachbarten Bahnen $\Delta v$ vorgesehen ist, stellt eine N-stufige Struktur des "Baum"-Typs dar, die auf jeder n-ten Stufe $2^{N-n}$ MZI aufweist. Der Multiplexer weist $2^N$ Eingänge zur Einführung einer Bahn in jeden Eingang sowie einen Ausgang für das multiplexierte optische Signal auf.

Wenn zu jedem Eingang einer solchen Vorrichtung Bahnen geführt werden, die einer Multiplexierung unterzogen werden, bündeln die MZI in der ersten Stufe die Bahnen zu $2^{N-1}$ Gruppen. Jede Gruppe wird in die zweite Stufe geführt, wo die Bahnen erneut gebündelt werden, jetzt zu $2^{N-2}$ Gruppen. Dieser Vorgang der Bündelung der Gruppen (und Bahnen) wird mit dem Emissionsdurchlass sukzessive über alle Stufen des Multiplexers fortgesetzt. Schließlich werden in der letzten Stufe alle Bahnen vollständig zu einem Strom (einem optischen Signal) gebündelt.

Optische Multiplexer auf der Grundlage eines MZI sowie andere, oben aufgezählte Multiplexer, sind in ihrer großen Mehrzahl statisch, d.h. sie haben feste Spektralkennlinien, und können daher nicht in FK mit spektraler Verdichtung der Bahnen verwendet werden, bei denen die Frequenzen der Bahnen dynamisch verändert werden.

Es ist auch bekannt, dass einkaskadige MZI, die mit Phasenverschiebungselementen versehen sind, Schlüsselelemente in steuerbaren optischen Eingangs-/Ausgangs-Multiplexern sein können (US 6,795,654 B2). Offensichtlich könnten sie bei geeigneter Anwendung auch Basis für die Herstellung eines steuerbaren optischen Multiplexers sein.

Die moderne optische Technologie bietet eine ausreichend große Auswahl an MZI, die in Multiplexern verwendet werden können, darunter in solchen mit dynamischer Funktionalität. Die einfachste Grundstruktur ist das asymmetrische einkaskadige MZI (im Folgenden als einkaskadiges MZI bezeichnet).

Ein Nachteil des einkaskadigen MZI besteht in der nicht idealen Form der Spektralkennlinien, die bei Verwendung in Spektralverdichtungssystemen mit hoher Bahndichte zu Querinterferenzen und schlechter Bahnisolation führen können. Wesentlich bessere Spektralkennlinien weisen asymmetrische zweikaskadige MZI und asymmetrische Multikaskaden-MZI auf (im Folgenden als zweikaskadige MZI und Multikaskaden-MZI bezeichnet). Multikaskaden-MZI zeichnen sich darüber hinaus durch wesentlich geringere eingebrachte Dispersion aus.

Es ist offensichtlich, dass ein steuerbarer optischer Multiplexer, der mit einer vielstufigen Struktur ausgebildet sein kann, einschließlich einer genügend großen Zahl von MZI, maximal vor Umwelteinwirkungen - Temperaturschwankungen, Vibrationen usw. - geschützt werden muss. Zum Erzielen der erforderlichen Stabilität und Zuverlässigkeit muss die Vorrichtung eine hohe Integrationsstufe der verwendeten MZI haben und kompakt ausgebildet sein; die passendste Technologie für die Herstellung einer solchen Vorrichtung kann die integraloptische Technologie sein.

**Offenbarung der Erfindung**

Aufgabe der Erfindung ist die Herstellung eines steuerbaren optischen Multiplexers für Spektralverdichtungssysteme mit dynamischer Funktionalität. Der Multiplexer muss die bestehenden Anforderungen bezüglich der Isolation der Bahnen und der eingebrachten Dispersion erfüllen und für eine integraloptische Ausführung vorteilhaft sein.

Bei der Entwicklung der Erfindung wurde als Aufgabe gestellt, ein Verfahren und eine Vorrichtung für eine spektrale Verdichtung einer Vielzahl von Bahnen mit Erzeugung eines optischen Mehrbahn-Signals mittels Steuerung der Spektralkennlinien der Filterstufen des Multiplexers zu schaffen.

Die Aufgabe wurde gelöst, indem ein Verfahren zum gesteuerten Multiplexieren von Bahnen in einem faseroptischen Kommunikationssystem mit spektraler Verdichtung von $2^N$ Bahnen geschaffen wurde, deren optische Frequenzen bei konstantem Spektralintervall zwischen benachbarten Bahnen $\Delta\nu$ verändert werden können, wobei:

(a) $2^N$ Bahnen jeweils einzeln in $2^N$ Eingänge einer N-stufigen Struktur des "Baum"-Typs eingeführt werden, die in jeder n-ten Stufe, bei $n = 1, 2, ..., N$, $2^{N-n}$ optische Filter aufweist, die zwei Eingänge und wenigstens einen Ausgang haben und so ausgebildet sind, dass sie eine gesteuerte Änderung der Transmissionsfaktoren ermöglichen und sich durch ein Frequenzintervall zwischen benachbarten Extremen bei Abhängigkeit der Transmissionsfaktoren von der Frequenz $\Delta\nu_n = 2^{n-1} \Delta\nu$ auszeichnen, und wobei jeder der beiden Eingänge jedes optischen Filters der ersten Stufe als Eingang der N-stufigen Struktur dient;

(b) der optische Filter jeder Stufe so aufgebaut ist, dass für die optische Frequenz jeder der $2^N$ Bahnen die Transmissionsfaktoren von einem der $2^N$ Eingänge der N-stufigen Struktur zum Ausgang den höchsten Wert haben;

(c) ein optisches Mehrbahnsignal durch die N-stufige Struktur durchgelassen wird und am Ausgang des optischen Filters der letzten Stufe ein optisches Mehrbahnsignal erhalten wird.

Die Aufgabe wird auch durch die Herstellung eines steuerbaren optischen Multiplexers zur Verwendung in faseroptischen Netzen mit Spektralverdichtung von $2^N$ Bahnen gelöst, deren optische Frequenzen bei konstantem Spektralintervall zwischen benachbarten Bahnen $\Delta\nu$ geändert werden können, der Folgendes umfasst:

- eine N-stufige Struktur des "Baum"-Typs, die in jeder n-ten Stufe, bei $n = 1, 2, ..., N$, $2^{N-n}$ optische Filter umfasst, die so ausgebildet sind, dass sie eine gesteuerte Änderung der Transmissionsfaktoren ermöglichen, und die sich in der n-ten Stufe durch ein Frequenzintervall zwischen benachbarten Extremen bei Abhängigkeit der Transmissionsfaktoren von der Frequenz $\Delta\nu_n = 2^{n-1}\Delta\nu$ auszeichnen und zwei Eingänge und wenigstens einen Ausgang aufweisen;

- eine Steuerungsvorrichtung zur Steuerung der Änderung der Transmissionsfaktoren der Filter.

Dabei ist es erfindungsgemäß zweckmäßig, dass bei der mehrstufigen Struktur:

- zwei Eingänge jedes optischen Filters der ersten Stufe mit einem der Eingangsporte verbunden sind;
- die optischen Filter in jeder Stufe außer der ersten durch jeden der zwei Eingänge mit dem Ausgang eines der optischen Filter der vorigen Stufe verbunden sind;
- der Ausgang des optischen Filters der letzten Stufe mit dem Ausgangsport verbunden ist.

Dabei ist es erfindungsgemäß zweckmäßig, dass die optischen Filter der mehrstufigen Struktur einkaskadige und/oder zweikaskadige und/oder multikaskadige asymmetrische Mach-Zehnder-Interferometer sind, während für die Steuerung des Auf baus der Transmissionsfaktoren die optischen Filter elektrooptische oder thermooptische Phasenverschiebungs-Vorrichtungen aufweisen.

Außerdem ist es erfindungsgemäß zweckmäßig, dass der Multiplexer in integraloptischer Technologie auf einem Chip ausgebildet ist.

Dabei ist es erfindungsgemäß zweckmäßig, dass in dem Multiplexer alle Eingangsporte und der Ausgangsport mittels Lichtleitern ausgebildet sind.

Erfindungsgemäß stellt damit der steuerbare optische Multiplexer eine mehrstufige baumartige Struktur mit optischen Filtern dar, von denen jeder die ungeraden und die geraden Bahnen bündelt und Elemente zur gesteuerten Änderung der Spektralkennlinien aufweist.

Im Allgemeinen können in einem erfindungsgemäßen Multiplexer als optische Filter gleichzeitig optische Filter verschiedener Typen - einkaskadige, zweikaskadige und multikaskadige MZI - verwendet werden. In den ersten Stufen der der mehrstufigen Struktur, wo Bahnen mit kleinem Spektralintervall auf den Eingang auftreffen, werden zweikaskadige oder sogar einkaskadige MZI verwendet, mit der Vergrößerung des Spektralintervalls zwischen den Bahnen in den folgenden Stufen werden multikaskadige MZI verwendet.

Für die gesteuerte Änderung der Spektralkennlinien der optischen Filter werden elektro- und thermooptische Phasenverschiebungsvorrichtungen verwendet. Da sie von außen steuerbar sind, ermöglichen die Phasenverschiebungsvorrichtungen die Änderung der Spektralkennlinien der optischen Filter und dadurch die erforderliche Änderung der Spektralkennlinien des gesamten steuerbaren optischen Multiplexers. Die Verwendung der elektro-optischen Phasenverschiebungsvorrichtung gewährleistet eine äußerst hohe Geschwindigkeit der gesteuerten Änderung der Spektralkennlinien des gesteuerten optischen Multiplexers.

## Kurze Beschreibung der Zeichnungen

Im Folgenden wird die Erfindung durch eine Beschreibung von erfindungsgemäßen Ausführungsbeispielen des Verfahrens zum gesteuerten optischen Multiplexieren von Bahnen mit Hilfe eines erfindungsgemäßen steuerbaren optischen Multiplexers und durch die beigefügten Zeichnungen erläutert, in denen:

Fig. 1 A    ein Schema eines bekannten einkaskadigen MZI ist;

Fig. 1B    eine repräsentative Darstellung des bekannten einkaskadigen MZI ist, das in Fig. 1A gezeigt ist;

Fig. 2    die Abhängigkeit der Transmissionsfaktoren von der optischen Frequenz für das einkaskadige MZI zeigt, das in Fig. 1A dargestellt ist;

Fig. 3A    ein Schema eines bekannten zweikaskadigen MZI ist;

Fig. 3B    eine repräsentative Darstellung des bekannten zweikaskadigen MZI ist, das in Fig. 3A gezeigt ist;

Fig. 4    die Abhängigkeit der Transmissionsfaktoren von der optischen Frequenz für das zweikaskadige MZI zeigt, das in Fig. 3A dargestellt ist;

Fig. 5A    ein Schema eines bekannten multikaskadigen MZI mit null oder annä- hernd null Dispersion ist, das drei zweikaskadige MZI umfasst;

Fig. 5B    eine repräsentative Darstellung des bekannten multikaskadigen Filters ist, der in Fig. 5A gezeigt ist;

Fig. 6    ein Schema der Ausführung einer der Varianten des erfindungsgemäßen steuerbaren optischen Multiplexers ist.

## Beste Ausführungsform der Erfindung

Erfindungsgemäß ist das Grundelement des steuerbaren optischen Multiplexers ein asymmetrisches Mach-Zehnder-Interferometer oder einkaskadiges MZI, wie es üblicherweise genannt wird. Dies ist eine bekannte und in der Optik oft verwendete Vorrichtung (M. Born, E. Wolf: "The Optic Base", Pergamon Press, Oxford, Fifth Edition, 1975, pp. 312-316; russische Übersetzung: M. Born und E. Wolf, "Osnovy optiki"; übersetzt unter der Redaktion von G.P. Motulewitsch; Nauka, Moskau 1970, S. 342-346).

Das einkaskadige MZI kann mit Hilfe verschiedener Bauteile und Technologien aufgebaut sein, darunter der Nutzung von faseroptischen Verteilern, Strahlteilern, Spiegelprismen und Polarisatoren. Am besten für eine Verwendung in einer mehrstufigen Struktur ist ein einkaskadiges MZI in planer Ausführung.

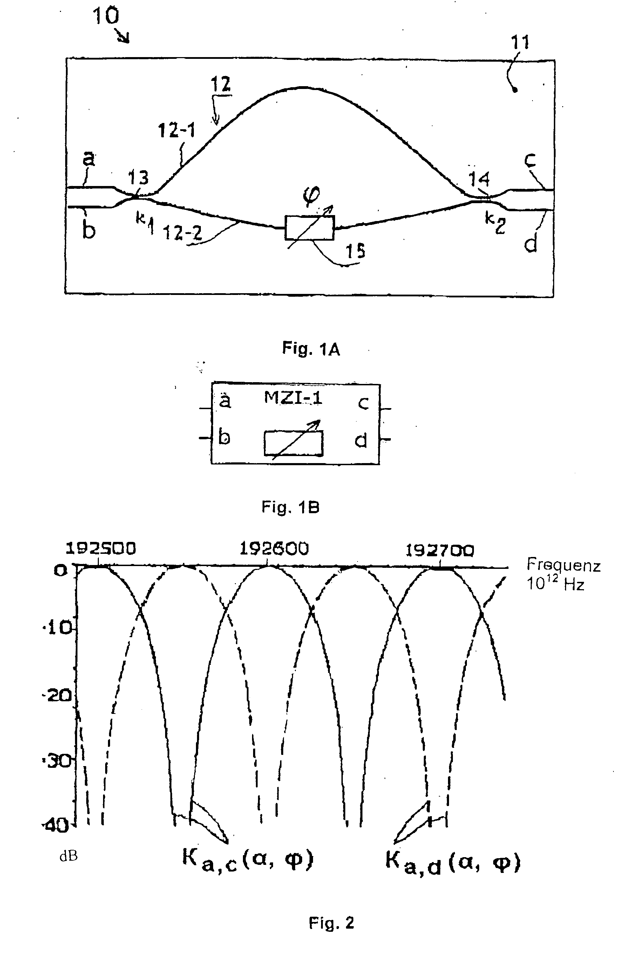

Fig. 1A zeigt eine schematische Darstellung einer Wellenleiter-Variante des einkaskadigen MZI 10, seine repräsentative Darstellung ist in Fig. 1B gezeigt.

Die Vorrichtung 10 ist auf einem Träger 11 angeordnet, wo das einkaskadige MZI 12 selbst zwischen dem ersten Verteiler 13 und dem zweiten Verteiler 14 mit zwei Armen 12-1 und 12-1 angeordnet ausgebildet ist, die durch Wellenleiter ungleicher Länge $l_1$ bzw. $l_2$ gebildet sind. Die Verbindungskoeffizienten $k_1$ und $k_2$ der Verteiler 13 und 14 sind gleich und teilen die optische Leistung im Verhältnis 50/50. Das einkaskadige MZI 12 weist Ausgänge a und b von der einen Seite und Ausgänge c und d von der anderen Seite auf.

Dabei umfasst das einkaskadige MZI die Phasenverschiebungsvorrichtung 15, die ein steuerbares Element ist, das für die Einstellung der Spektralkennlinien verwendet wird und eine zusätzliche Phasenverschiebung φ. in die Phase der laufenden Welle einführen kann.

Die Größe der Phasenverschiebung φ wird mit Hilfe eines thermooptischen oder elektrooptischen Effekts mit Hilfe elektrischen Stroms oder elektrischer Spannung reguliert. Dementsprechend kann die Phasenverschiebungsvorrichtung 15 unter Verwendung thermooptischen Materials, beispielsweise Silikon, oder elektrooptischen Materials, beispielsweise Lithiumniobat (LiNbO3) oder Galliumarsenid hergestellt sein. Solche Phasenverschiebungsvorrichtungen sind in der Spektralverdichtungstechnik als Instrument für die Einstellung von Spektralkennlinien optischer Filter auf MZI-Basis bekannt und werden auch in anderen Vorrichtungen - Modulatoren und Schaltvorrichtungen - verwendet.

Bei der Einführung durch den Port a kann die Emission mit einheitlicher Stärke der Lichtintensität an zwei Ausgangsporten c und d mit Hilfe der Transmissionsfaktoren $K_{ac}$ (ν, φ) und $K_{ad}$ (ν, φ) ausgedrückt werden:

$$K_{ac}(\nu, \varphi) = 0{,}5 \cdot [1 + \cos{(\frac{2\pi n \Delta L \nu}{c} + \varphi)}]$$

(1)

$$K_{ad}(\nu, \varphi) = 0{,}5 \cdot [1 + \cos{(\frac{2\pi n \Delta L \nu}{c} + \varphi + \pi)}]$$

(2)

wobei $D = 2\pi n \Delta L \nu / c$ die Phasenverzögerung ist, die durch die verschiedene optische Länge der Arme 22-1 und 22-1 bedingt ist; $\Delta L = l_1 - l_2$; n der Brechungsindex des Materials ist; ν die optische Frequenz und c die Lichtgeschwindigkeit im leeren Raum ist.

Bei einer Anregung durch den Port b kann die Lichtintensität in denselben Ausgangsporten c und d mit Hilfe der Transmissionsfaktoren $K_{bc}(\nu, \varphi)$ und $K_{bd}(\nu, \varphi)$ dargestellt werden:

$$K_{bc}(\nu, \varphi) = 0{,}5 \cdot [1 + \cos{(\frac{2\pi n \Delta L \nu}{c} + \varphi + \pi)}]$$

(3)

$$K_{bd}(\nu, \varphi) = 0{,}5 \cdot [1 + \cos{(\frac{2\pi n \Delta L \nu}{c} + \varphi)}]$$

(4)

Die in einem beliebigen Intervall beobachteten Frequenzen ν (oder Wellenlängen λ), die Transmissionsfaktoren (1)-(4) werden zu den Spektralkennlinien des einkaskadigen MZI. Wie ersichtlich ist, sind die Spektralkennlinien (1)-(4) periodische Funktionen der Lichtfrequenz ν oder Wellenlänge λ, des Längenunterschieds der Arme ΔL, des Brechungsindexes n und der Phasenverschiebung φ.

Für eine Einsatzfähigkeit des einkaskadigen MZI sind die folgenden Eigenschaften wesentlich:

- die Abstände zwischen benachbarten Extremen in den Spektralkennlinien (1)-(4) in Einheiten der optischen Frequenz Δν und in Einheiten der Wellenlängen Δλ sind gleich:

$$\Delta \nu = \frac{c}{2 \Delta L n} \quad \text{und} \quad \Delta \lambda = \frac{\lambda^2}{2 \Delta L n}$$

(5)

- die Transmissionsfaktoren (1)-(4), die dem Übergang der optischen Emission von einem Eingangsport zu zwei Ausgangsporten entsprechen, unterscheiden sich in ihrer Phase um π;
- die Transmissionsfaktoren ändern sich bei Austausch zweier Indices nicht, d.h. $K_{ad}$ (ν, φ) = $K_{bc}$ (ν, φ) und $K_{ac}$ (ν, φ) = $K_{bd}$ (ν, φ);
- bei Änderung der Größe der Phasenverschiebung φ können die Spektralkennlinien (1)-(4) geändert werden, indem sie entlang der Frequenzachse (der Wellenlängenachse) bewegt werden; das führt insbesondere bei einer Änderung der Phasenverschiebung um $\delta\varphi = \pm \pi$ zu einer Umkehr der Signale an den Ausgängen;

- die Transmissionsfaktoren ändern sich nicht bei einer Transposition der Indices, d.h. das einkaskadige MZI ist eine Umkehrvorrichtung.

Aus diesen Eigenschaften folgt wiederum, dass, wenn ein optisches Signal auf den Eingang des Einkaskaden-MZI trifft, das mehrere Bahnen umfasst, deren Wellenlängenfrequenzen (Wellenlängen) mit der Position der Extreme bei Abhängigkeit der Transmissionsfaktoren von der Frequenz (der Wellenlänge) übereinstimmt, die Signale in zwei Gruppen eingeteilt werden, die zu verschiedenen Ausgängen hinausgeführt werden. Eine Gruppe umfasst die ungeraden Bahnen, die andere Gruppe die geraden Bahnen, in beiden Gruppen wird das Spektralintervall zwischen den Bahnen zweimal so groß wie an dem Eingang des einkaskadigen MZI. Wenn dasselbe optische Signal auf einen anderen Eingang trifft, tauschen die geraden und die ungeraden Bahnen an den Ausgängen ihre Plätze.

Da das einkaskadige MZI eine Umkehrvorrichtung ist, werden in einer anderen Situation, wenn die ungeraden Bahnen zu einem Eingang geführt werden und die geraden Bahnen zu einem anderen Eingang geführt werden, beide Gruppen von Bahnen zu einem optischen Strom mit dichterer Anordnung der Bahnen gebündelt. Vorrichtungen, die die Funktion der Einteilung der Bahnen in ungerade und gerade sowie die Umkehrfunktion, die Bündelung ungerader und gerader Bahnen zu einem Strom, ausführen, werden in der ausländischen Literatur Interleaver genannt, in der russischen Literatur gibt es keinen Begriff für Vorrichtungen mit dieser Funktion, und bei dieser Erfindung werden sie als optische Filter bezeichnet.

Der Abstand zwischen den benachbarten Extremen $\Delta\nu$ (oder $\Delta\lambda$) in den Spektralkennlinien für ein reales einkaskadiges MZI muss im Stadium seiner Herstellung durch Auswahl der entsprechenden Unterschiede der Längen der Arme $\Delta L$ und des Brechungsindex $n$ gewählt werden. Die steuerbare Änderung der Position der Extremwerte der Transmissionsfaktoren bezüglich der vorher bestimmten Frequenzen $\{\nu_i\}$ (oder Wellenlängen $\{\lambda_i\}$) muss mit Hilfe der entsprechenden Regelung der Phasenverschiebung $\varphi$ unter Verwendung des optischen Filters als Teil einer beliebigen konkreten Vorrichtung erfolgen.

In Fig. 2 sind die Transmissionsfaktoren $K_{ac}$ $(\nu, \varphi)$ und $K_{ad}$ $(\nu, \varphi)$ als Funktionen der optischen Frequenz für ein beliebiges einkaskadiges MZI gezeigt, das bei entsprechenden Werten der Phasenverzögerung D und bei einer Phasenverschiebung $\varphi$ einen Abstand zwischen den benachbarten Extremen von 50 GHz hat und damit für eine Bündelung der geraden und ungeraden Bahnen zu einem Gesamtstrom verwendet werden kann, mit einem Intervall von 50 GHz zwischen den bezüglich der Frequenz benachbarten Bahnen. Die durchgezogenen Linien stellen die spektrale Abhängigkeit des Transmissionsfaktors $K_{ac}$ $(\nu, \varphi)$ dar, entsprechend derer eine Gruppe von Bahnen - die ungeraden Bahnen - zum Ausgang c hinausgeführt werden, die gestrichelten Linien stellen die spektrale Abhängigkeit des Transmissionsfaktors $K_{ad}$ $(\nu, \varphi)$ dar, die für die Hinausführung der anderen Gruppe von Bahnen - der geraden Bahnen - zum Ausgang d verantwortlich ist.

Wie aus Fig. 2 zu ersehen ist, besteht ein Nachteil des optischen Filters in den unflachen Spitzen und den langsam abfallenden Rändern der Linien der Spektralbänder, was bei einem kleinen Spektralintervall zwischen den Bahnen zu Querinterferenzen zwischen benachbarten Bahnen führen kann. Ein weiterer bekannter Nachteil liegt darin, dass bei einem großen Unterschied der Längen der Arme $\Delta L$ die einzubringende Dispersion äußerst hoch sein kann (US 6,782,158 B). Diese Nachteile begrenzen die Möglichkeit der Nutzung von einkaskadigen MZI in Vorrichtungen, die in Kommunikationssystemen mit Spektralverdichtung der Bahnen verwendet werden können.

Eine wesentliche Verbesserung der Spektralkennlinien des optischen Filters für Vorrichtungen und Systeme mit Spektralverdichtung werden bekanntlich (US 6,782,158 B) durch zweikaskadige MZI erreicht, die sowohl auf der Basis von faseroptischen Verteilern, Lichtteilern, Spiegelprismen, Polarisatoren und anderen Vorrichtungen als auch auf intervalloptische Art aufgebaut sein können und dabei eine Phasenverschiebungsvorrichtung aufweisen können.

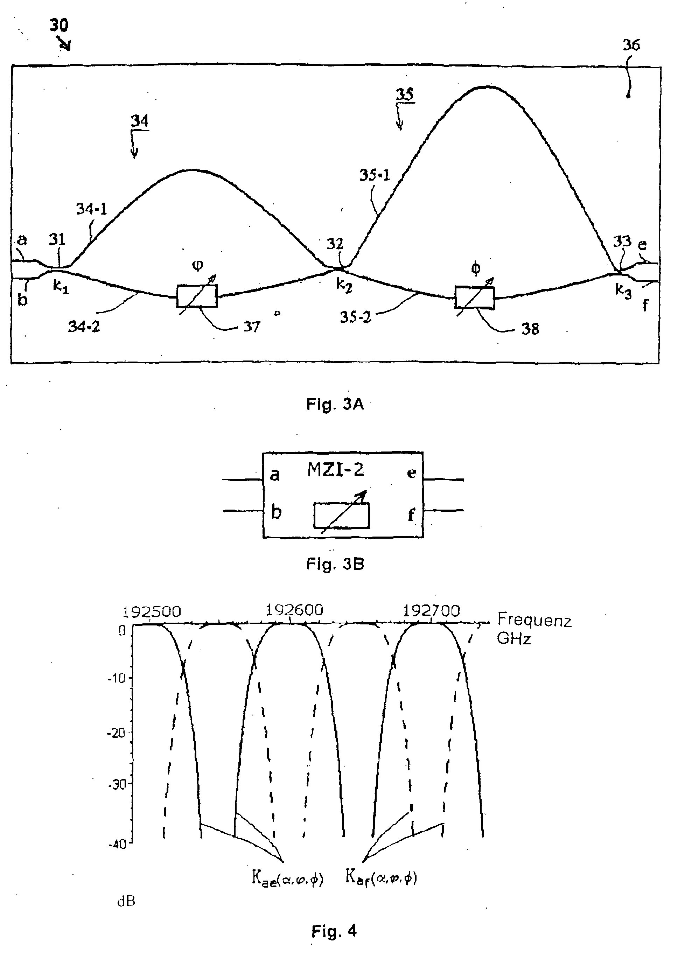

In Fig. 3A ist eine schematische Darstellung der Wellenleitervariante eines zweikaskadigen MZI 30 gezeigt, dessen repräsentative Darstellung in Fig. 3B gezeigt ist. Darin werden drei Verteiler 31, 32 und 33 mit Verbindungskoeffizienten $k_1$, $k_2$ bzw. $k_3$ verwendet, die zwei einkaskadige MZI 34 und 35 bilden. Die Vorrichtung 30 ist auf einem einzelnen Träger 36 angeordnet.

Dabei ist das erste einkaskadige MZI 34 aus zwei Wellenleitern 34-1 und 34-2 von ungleicher Länge $l_{34-1}$ bzw. $l_{34-2}$ aufgebaut. Das zweite einkaskadige MZI 35 ist aus zwei Wellenleitern 35-1 und 35-2 von ungleicher Länge $l_{35-1}$ bzw. $l_{35-2}$ aufgebaut. Die Phasenverzögerungen $D_1 = 2\pi n$ $(l_{34-1} - l_{34-2})/\lambda$ und $D_2 = 2\pi n$ $(l_{35-1} - l_{35-2})/\lambda$ sind miteinander im Verhältnis $D_2 = 2 \cdot D_1$ verbunden.

In den MZI 34 und 35 werden Phasenverschiebungsvorrichtungen 37 und 38 verwendet, die die Phasenverschiebungen $\varphi$ bzw. $\phi$ einführen. Das zweikaskadige MZI weist die Ausgänge a und b auf der einen Seite und die Ausgänge e und f auf der anderen Seite auf.

Die Spektralkennlinien des zweikaskadigen MZI 30 sind analytisch einfach zu erhalten. Für die drei Verteiler 31-1, 31-2 und 31-3 müssen Matrices $T(k_i)$ (i = 1, 2, 3) eingeführt werden, die die Lichtamplituden am Eingang und am Ausgang mit den Verteilerparametern verbinden:

$$T(k_i) = \begin{bmatrix} \cos(k_i) & -i\sin(k_i) \\ -i\sin(k_i) & \cos(k_i) \end{bmatrix}$$

(6)

und für die beiden einkaskadigen MZI 33 und 34 die Matrices $T(D_1)$ und $T(D_2)$:

$$T(D_1) = \begin{bmatrix} e^{i(D_1+\varphi)} & 0 \\ 0 & 1 \end{bmatrix} \quad \text{und} \quad T(D_2) = \begin{bmatrix} e^{i(D_2+\phi)} & 0 \\ 0 & 1 \end{bmatrix}$$

( 7)

Dann wird die Durchlassmatrix $M(v, \varphi, \phi)$ des zweikaskadigen MZI durch Erzeugung von fünf Matrices bestimmt:

$$M(v,\varphi,\phi) = \begin{bmatrix} M_{ec} & M_{ed} \\ M_{fc} & M_{fd} \end{bmatrix} = T(k_3)T(D_2)T(k_2)T(D_1)T(k_1)$$

(8)

Da die Transmissionsfaktoren des zweikaskadigen MZI die optische Intensität am Ausgang mit der optischen Intensität am Eingang verbinden, ist für ihre Bestimmung der Ausdruck zu verwenden:

$$K_{af}(v, \varphi, \phi) = \left| M_{af}(v,\varphi,\phi) \right|^2$$

(9)

Aus den Ausdrücken (6)-(9) können alle Grundeigenschaften der zweikaskadigen MZI erhalten werden. Es ist nicht schwer zu überprüfen, dass das zweikaskadige MZI bei einer Einführung von Emission durch die Porte a und b eine Vorrichtung bleibt, die die Funktion der Teilung und Bündelung der ungeraden und der geraden Bahnen ausführt. Wenn ein optisches Signal auf den Port a eines beliebigen zweikaskadigen MZI trifft, werden damit die Bahnen in zwei Gruppen eingeteilt, wobei die eine Gruppe die ungeraden Bahnen und die andere Gruppe die geraden Bahnen umfasst. Es ist die wichtige Eigenschaft zu beachten, die das zweikaskadige MZI hat: Wenn dasselbe optische Signal auf den anderen Eingang - Port b in Fig. 3a - trifft, tauschen die Gruppen mit den ungeraden und den geraden Bahnen die Plätze an den Ausgangsporten e und f.

Die Abstände zwischen den benachbarten Extremen $\Delta v$ und $\Delta\lambda$ in den Spektralkennlinien werden auch durch die Ausdrücke (5) bestimmt, wobei $\Delta L$ der Längenunterschied der Arme in der ersten Kaskade des zweikaskadigen MZI 40 ist, d.h. $\Delta L = l_{44\text{-}1} - l_{44\text{-}2}$. Die Möglichkeit einer steuerbaren Verschiebung der Spektralkennlinien bleibt erhalten, nun schon mit Hilfe von zwei Phasenverschiebungen $\varphi$ und $\phi$ Um die Spektralkennlinien $K_{ae}(v, \varphi, \phi)$ und $K_{af}(v, \varphi, \phi)$ auf der Frequenzachse um die Größe $\delta v$ zu verschieben, müssen mit Hilfe der entsprechenden Phasenverschiebungsvorrichtungen die Phasen $\varphi$ und $\phi$ geändert werden:

$$\delta\varphi = -\frac{\pi \cdot \delta\upsilon}{\Delta\upsilon} \qquad \text{und} \qquad \delta\phi = -\frac{2\pi \cdot \delta\upsilon}{\Delta\upsilon}$$

$$(10)$$

Auch die Ausdrücke (6)-(9) machen deutlich, dass bei der Einführung der Signale durch die Porte e und f die Möglichkeit der Einteilung in ungerade und gerade Bahnen und entsprechend der Bündelung der ungeraden und der geraden Bahnen verloren geht. Das ist eine Folge davon, dass die Matrices entsprechend den Ausdrücken (6) und (7) nicht kommutierbar sind. Deshalb sind zweikaskadige MZI keine umkehrbaren Vorrichtungen - die beiden Porte a und b können von der einen Seite nur als Eingangsporte verwendet werden, während die beiden anderen Porte e und f von der entgegengesetzten Seite nur als Ausgangsporte genutzt werden können.

In Fig. 4 sind die Transmissionsfaktoren $K_{ae}$ ($\nu$, $\varphi$, $\phi$) und $K_{af}$ ($\nu$, $\varphi$, $\phi$) für ein beliebiges zweikaskadiges MZI als Funktionen der optischen Frequenz dargestellt, die mit Hilfe der Ausdrücke (6)-(9) berechnet werden. Dieses zweikaskadige MZI kann bei den Kopplungsfaktoren $k_1$ = 0,7854, $k_2$ = 2,0944, $k_3$ = 0,3218, die den Phasenverzögerungen $D_1$ und $D_2$ und den Phasen $\varphi$ und $\phi$ entsprechen, als optischer 50-GHz-Filter zur Bündelung gerader und ungerader Bahnen zu einem Gesamtstrom von Bahnen mit einem Intervall von 50 GHz zwischen bezüglich der Frequenz benachbarten Bahnen verwendet werden. Die durchgezogenen Linien stellen die spektrale Abhängigkeit des Transmissionsfaktors $K_{ae}$ ($\nu$, $\varphi$, $\phi$) dar, dementsprechend bei der Einführung durch den Port a eine Gruppe von Bahnen (die ungeraden Bahnen) zu dem Ausgang e hinausgeführt wird, die gestrichelten Linien stellen die spektrale Abhängigkeit des Transmissionsfaktors $K_{af}$ ($\nu$, $\varphi$, $\phi$) dar, die für das Herausführen der anderen Gruppe von Bahnen (der geraden Bahnen) zum Ausgang f verantwortlich ist.

Wie ersichtlich ist, hat das zweikaskadige MZI eine wesentlich bessere Form der Spektralkennlinien, die annähernd rechtwinklig ist, mit einer flachen Spitze und starkem Abfallen an den Rändern des Spektralbands. Daher ermöglicht das zweikaskadige MZI, das als optischer Filter verwendet wird, eine bessere Unterdrückung der Querinterferenzen und eine starke Isolation der Bahnen. Nichtsdestoweniger bleibt die eingebrachte Dispersion des zweikaskadigen MZI hoch, und deshalb ist seine Nutzbarkeit als Filter in Kommunikationssystemen mit hoher Datenübertragungsgeschwindigkeit begrenzt.

Es ist bekannt, dass die Situation zum besseren gewendet werden kann, wenn Filter verwendet werden, die als Ergebnis einer Kaskadierung von zweikaskadigen MZI erhalten werden. Bei einer der Varianten solcher Vorrichtungen können komplementäre zweikaskadige MZI verwendet werden, die identische Transmissionsfaktoren haben, aber Dispersionen mit entgegengesetztem Vorzeichen. Die Komplementarität der zweikaskadigen MZI wird durch ein bestimmtes Verhältnis der Kopplungsfaktoren $k_1$, $k_2$, und $k_3$ bei den verwendeten zweikaskadigen MZI ermöglicht (US 6,782,158 B2).

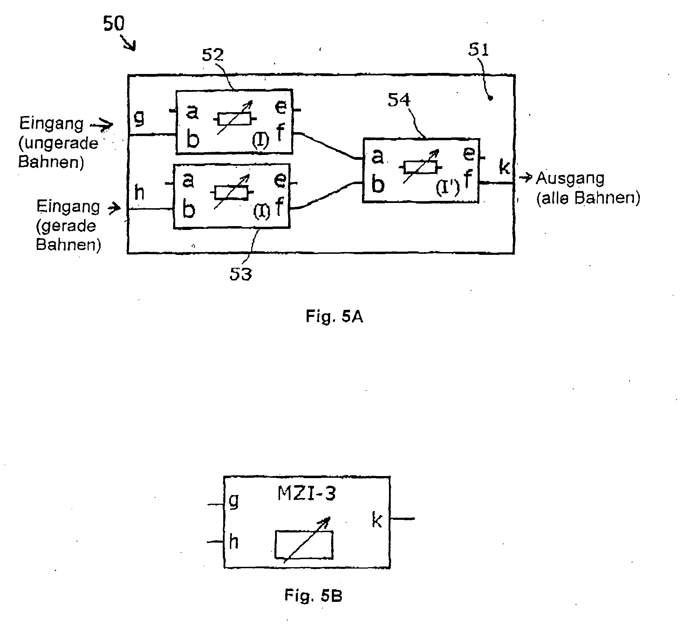

In Fig. 5A ist eine der Varianten eines Multikaskaden-MZI 50 gezeigt, das zur Bündelung der ungeraden und der geraden Bahnen verwendet werden kann; eine repräsentative Darstellung des Multikaskaden-MZI ist in Fig. 5B gezeigt. Die Vorrichtung 50 in Wellenleiter-Ausführung ist auf einem Träger (einem Kristall) 51 angeordnet und umfasst drei zweikaskadige MZI: In der ersten Kaskade werden zwei zweikaskadige MZI 52 und 53 verwendet, beide vom Typ I, und in der zweiten Kaskade wird ein zweikaskadiges MZI 54 vom Typ I' verwendet, d.h. mit entgegengesetztem Dispersionsvorzeichen.

Bei Einführung von ungeraden und geraden Bahnen entsprechend durch die Außenporte g und h lässt von den MZI 52 und 53 das eine die ungeraden und das andere die geraden Bahnen zu seinen Ausgangsporten f durch. Die Bahnen werden mit Hilfe des MZI 54 gebündelt, was dazu führt, dass sie zu dem Außenport k hinausgeführt werden. Da die Dispersionen der zweikaskadigen MZI 52 und 53 und des zweikaskadigen MZI 54 entgegengesetzte Vorzeichen haben, wird dadurch eine Dispersion der gesamten Vorrichtung 50 erreicht, die null oder nahezu null ist.

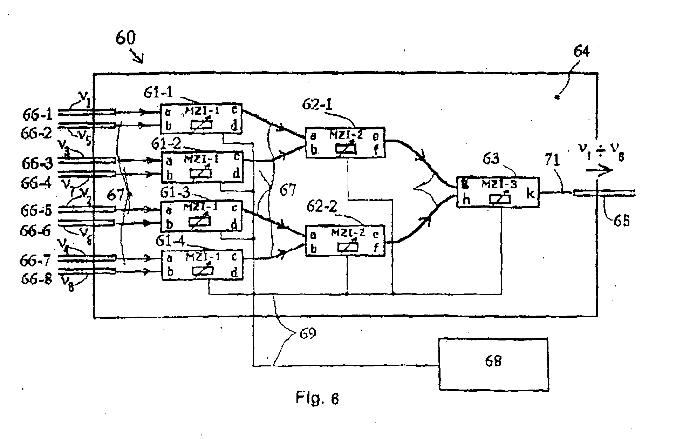

Das Schema einer der Ausführungsformen des erfindungsgemäßen steuerbaren optischen Multiplexers ist in Fig. 6 dargestellt. Dies ist ein steuerbarer optischer Multiplexer 60 der Konfiguration "1x8", das heißt, eine Vorrichtung zur Bündelung von 8 Bahnen mit einem Spektralintervall zwischen bezüglich der Frequenz benachbarten Bahnen, das gleich $\Delta\nu$ = 1600 GHz ist.

Der Multiplexer stellt eine dreistufige Struktur des "Baum"-Typs mit sieben optischen Filtern dar. Vier optische Filter (61-1)-(61-4) der ersten Stufe der mehrstufigen Struktur sind mit ihren Ausgangsporten mit zwei folgenden optischen Filtern 62-1 und 62-2 der zweiten Stufe verbunden, die ihrerseits mit zwei Ausgangsporten mit optischem Filter MZI 63 der dritten Stufe verbunden sind. Die gesamte Vorrichtung ist auf einem einzelnen Träger 64 ausgebildet.

Die äußeren optischen Ausgänge sind mittels Lichtleitern ausgeführt. Dabei wird der Lichtleiter 65 als Gesamt-Ausgangsport und die Lichtleiter 66-1, ..., 66-8 als 8 Porte jeweils zur Einführung einer einzelnen Bahn verwendet. Die Bündelungen der optischen Filter aller drei Ebenen und auch ihrer Porte mit den äußeren Lichtleiterausgängen wird durch die Wellenleiter 67 durchgeführt, die auf dem Träger 64 ausgebildet sind. Die Lichtleiter 65, 66-1,..., 66-8 sind optisch mit den Wellenleitern 67 mit maximaler Wirksamkeit abgestimmt.

Die dynamische Steuerung des Betriebs des Multiplexers 60 wird mittels der Änderung der Spektralkennlinien von sieben optischen Filtern bei Aufbringen entsprechender Belastungen auf den Phasenverschiebungsvorrichtungen bewirkt, die in allen optischen Filtern enthalten sind. Die Steuerung wird mit Hilfe einer Steuerungsvorrichtung 68 durchgeführt, die mit den optischen Filtern einer elektrischen Busbar 69 verbunden ist.

Der Aufbau des Multiplexers ist so, dass entsprechend dem Übergang des optischen Signals von einer Stufe zur nächsten Stufe die Spektralintervalle zwischen den Bahnen zweimal so klein werden. Für die optischen Filter (61-1)-(61-4) in der ersten Stufe ist das Spektralintervall zwischen den Kanälen maximal, für den optischen Filter 63 dagegen minimal, für die optischen Filter 62-1 und 62-2, die in der zweiten Stufe verwendet werden, ist das Spektralintervall mittelgroß. Daher können die Anforderungen an die Kennlinien, die in den entsprechenden Stufen der optischen Filter verwendet werden, unterschiedlich sein. Als optische Filter können bei diesem Beispiel in der ersten Stufe einkaskadige MZI (Fig. 1B), in der zweiten Stufe zweikaskadige MZI (Fig. 3B) und in der dritten Stufe ein Multikaskaden-MZI (Fig. 5B) verwendet werden. Die Eingangs- und Ausgangsporte der optischen Filter der zweiten und der dritten Stufe müssen so verbunden sein, dass das optische Signal in der Richtung von der ersten zu der zweiten Kaskade der zweikaskadigen MZI 65 und 66 und der zweikaskadigen MZI, die Teil des Multikaskaden-MZI 67 sind, durchgelassen wird.

Der Abstand ΔF zwischen benachbarten Extremen in den Spektralkennlinien für die optischen Filter in den drei Stufen der diskutierten Vorrichtung sind folgende: Für die einkaskadigen MZI (61-1)-(61-4): $\Delta v_{61-1} = \Delta v_{61-2} = \Delta v_{61-3} = \Delta v_{61-4} = 1600$ GHz; für die zweikaskadigen MZI 62-1 und 62-2: $\Delta v_{62-1} = \Delta v_{62-2} = 800$ GHz, und für das Multikaskaden-MZI 63: $\Delta v_{63} = 400$ GHz.

Dementsprechend ist der Unterschied ΔL der Länge der Arme nach dem Ausdruck (5) bei den einkaskadigen MZI 61-1 - 61-4 gleich $\Delta L_{61-1} = \Delta L_{61-2} = \Delta L_{61-3} = \Delta L_{61-4} = 250$ $\mu$m, bei den ersten Kaskaden der zweikaskadigen MZI 62-1 und 62-2 ist der Unterschied gleich $\Delta L_{62-1} = \Delta L_{62-2} = 125$ $\mu$m, bei den ersten Kaskaden des zweikaskadigen MZI, die Teil des Multikaskaden-MZI 63 sind, beträgt der Unterschied der Länge der Arme $\Delta L_{63} = 62,5$ $\mu$m (angenommen, dass n = 1,5).

Für die weitere Diskussion ist es zweckmäßig, den Begriff des Multiplexer-Transmissionsfaktors einzuführen, inhaltlich analog zu dem weiter oben bei der Diskussion der MZI verwendeten, der aber in diesem Fall im Verhältnis zu der Übertragung des optischen Signals von einem der Eingangsporte (66-1)-(66-8) des Multiplexers zum gemeinsamen Ausgangsport 65 steht. Die Multiplexer-Transmissionsfaktoren, die als $K_{66-1}$ - $K_{66-8}$ definiert sind, werden durch Bildung der Transmissionsfaktoren der optischen Filter bestimmt, durch die das optische Signal hindurchgeht, bevor es an dem gemeinsamen Ausgang 65 ankommt. Beispielsweise hat der Transmissionsfaktor von dem Eingangsport 66-3 zu dem Ausgangsport 65 die Form:

$$K_{66-3}(v) = K_{ab}^{61-2}(v, \varphi_{61-2}, \phi_{61-2}) K_{bc}^{62-1}(v, \varphi_{62-1}, \phi_{62-1}) K_{gk}^{63}(v, \varphi_{63}, \phi_{63})$$

$$(11)$$

wobei die drei Co-Faktoren im rechten Teil die Transmissionsfaktoren der drei optischen Filter 61-2, 62-1 und 63 sind, deren obere Indices der Nummer des optischen Filters entsprechen, während die unteren Indices den Eingangs- und Ausgangsporten des optischen Filters entsprechen.

Es ist offensichtlich, dass die Multiplexer-Transmissionskoeffizienten eine Funktion der optischen Frequenz und der Phasenverschiebungen $\{\varphi_n\}$ und $\{\phi_n\}$ sind. Für den Multiplexer 60 muss bei korrekter Einstellung der Phasenverschiebungen für alle sieben optischen Filter jeder der acht Transmissionsfaktoren den maximalen Wert für die Trägerfrequenz der einen Bahnen und den minimalen Wert für die Frequenz der anderen Bahnen haben.

Bei einigen Phasenverschiebungen $\{\varphi^*n\}$ und $\{\phi^*_n\}$ - der Phasen in der ersten und der zweiten Kaskade der verwendeten MZI - muss der Transmissionskoeffizient von dem Eingangsport 66-3 zum Eingangsport den Wert haben: $K_{66-3}(v_3) \approx 1$ und $K_{66-3}(v) \approx 0$ bei $v \neq v_3$. Eine ähnliche Form haben bei Phasenverschiebungen $\{\varphi^*_n\}$ und $\{\phi^*_n\}$ auch andere Transmissionskoeffizienten des Demultiplexers 60, natürlich für die Frequenzen der anderen Bahnen.

Angenommen, dass an den Eingangsporten des Multiplexers 60 Eingangssignale auftreffen; acht Bahnen mit einer Bahnverteilung nach Eingangsporten entsprechend Tabelle 1.

Tabelle 1: Verteilung der Bahnen nach Eingangsporten

| Eingangsport | 66-1 | 66-2 | 66-3 | 66-4 | 66-5 | 66-6 | 66-7 | 66-8 |
|---|---|---|---|---|---|---|---|---|
| Trägerfrequenz der Bahn | $\nu_1$ | $\nu_5$ | $\nu_3$ | $\nu_7$ | $\nu_2$ | $\nu_6$ | $\nu_4$ | $\nu_8$ |

Bei Werten der Phasenverschiebungen $\{\varphi^*_n\}$ und $\{\phi^*_n\}$ funktioniert der Multiplexer 60 als Gesamt-Multiplexer mit festgelegten Bahnfrequenzen. Die einkaskadigen MZI (61-1)-(61-4) der ersten Ebene bündeln paarweise die Bahnen und richten sie durch ihre vier Ausgangsporte auf die zweite Ebene zu den zweikaskadigen MZI 62-1 und 62-2. Die zweikaskadigen MZI 62-1 und 62-2 bündeln wiederum die Bahnen und richten sie auf die folgende Ebene der mehrstufigen Struktur. Auf der dritten Ebene, nach Durchlauf der Wellen durch das MZI 63, werden alle Bahnen gebündelt und treffen auf den gemeinsamen Ausgangsport 63.

Angenommen, dass an den Eingangsporten des Multiplexers Signale anfangen auf zutreffen, deren neue Zentralfrequenzen der Bahnen $\{\nu'_i\}$ alle um die Größe $\delta\nu < \Delta\nu$ verschoben sind, d.h. $\nu'_i = \nu_i + \delta\nu$. Um die Bahnen mit den neuen optischen Trägern nach den einzelnen Ausgangsporten zu multiplizieren und zu bündeln, müssen Phasenänderungen $\{\varphi^*_n\}$ und $\{\phi^*_n\}$ durchgeführt werden, gemäß dem Ausdruck (10). Um beispielsweise zu einer Multiplizierung der Bahnen überzugehen, deren Frequenzen sich um die Größe $\delta\nu = 50$ GHz verschoben haben, müssen die Phasenverschiebungen entsprechend Tabelle 2 geändert werden.

Tabelle 2: Änderung der Phasen $\{\varphi^*_n\}$ und $\{\phi^*_n\}$ bei einer Verschiebung der Bahnfrequenzen $\delta\nu = 50$ GHz

| | MZI (61-1)-(61-4) | MZI 62-1 und 62-2 | MZI 63 |
|---|---|---|---|
| 1. Kaskaden | $\delta\varphi_{61-4}$ bis $\delta\varphi_{64} = -\pi/32$ | $\delta\varphi_{62-1} = \delta\varphi_{62-2} = -\pi/16$ | $\delta\varphi_{63} = -\pi/8$ |
| 2. Kaskaden | - | $\delta\varphi_{62-1} = \delta\varphi_{62-1} = -\pi/8$ | $\delta\pi_{63} = -\pi/4$ |

Andere Varianten des erfindungsgemäßen steuerbaren optischen Multiplexers können sich von der diskutierten Vorrichtung 60 in Zahl und Typ der verwendeten optischen Filter unterscheiden. Allgemein ist für einen steuerbaren optischen Multiplexer der Konfiguration "Mx1", wobei M ein Wert aus der Reihe 4, 16, 32, ... $2^N$ bei $N \geq 2$ die Zahl der Stufen in einer Multikaskadenstruktur N, wobei in jeder n-ten Stufe bei $n = 1, 2, ... N$ $2^{N-n}$ optische Filter verwendet werden müssen, und die Gesamtzahl der optischen Filter ist entsprechend gleich $2^n - 1$. Für eine Multiplizierung von 32 Bahnen steigt beispielsweise die erforderliche Zahl der Stufen auf 5 und die Zahl der verwendeten optischen Filter auf 31.

Die Einstellung der optischen Filter in jeder Stufe muss so erfolgen, dass für eine optische Frequenz jeder der $2^N$ Bahnen die Transmissionsfaktoren von einem der $2^N$ Eingänge der N-stufigen Struktur zum Ausgang einen maximalen Wert haben.

Für einen steuerbaren optischen Multiplexer, der für eine Verwendung in einem DWDM-System vorgesehen ist, ist es zweckmäßig, um einerseits die erforderlichen technischen Parameter zu ermöglichen und andererseits die Kosten zu senken, in den ersten Stufen einkaskadige MZI, in den folgenden Stufen bei einem mittleren Spektralintervall zwischen den Bahnen zweikaskadige MZI und schließlich in den letzten Stufen, wo Bahnen mit kleinem Intervall auf den Eingang treffen, Multikaskaden-MZI zu verwenden.

Für einen steuerbaren optischen Multiplexer, der für ein CWDM-System vorgesehen ist, können als optische Filter zweikaskadige oder sogar einkaskadige MZI verwendet werden. Es ist anzumerken, dass aufgrund der Umkehrbarkeit der optischen Kennlinien der einkaskadigen MZI eine entsprechende Vorrichtung insgesamt ebenfalls umkehrbar ist, d.h. sie kann als steuerbarer Multiplexer/Demultiplexer verwendet werden.

Steuerbare optische Multiplexer können nicht nur in Kommunikationssystemen mit Spektralverdichtung Anwendung finden, sondern auch in einer Reihe anderer Systeme, beispielsweise in MehrkanalTransmittersystemen, für eine optische Filterung, in analogen Systemen zu den verschiedensten Zwecken.

Beispielsweise kann der oben beschriebene steuerbare optische Multiplexer 60 in einem optischen System mit festgelegten Bahnfrequenzen verwendet werden, bei dem Situationen auftreten können, in denen die Bahnen an den Eingängen die Plätze tauschen. Die erforderliche Funktion kann auch mit Hilfe entsprechender Änderungen der Größe der Phasenverschiebungen $\{\varphi_n\}$ und $\{\phi_n\}$ erreicht werden. Wenn es beispielsweise erforderlich ist, an den Eingängen 66-1 und 66-2 die Plätze aller Bahnen mit den Trägerfrequenzen $\nu_1$ und $\nu_5$ zu tauschen, während die Verteilung der übrigen Bahnen an den Eingangsporten so bleibt wie zuvor, muss mit Hilfe der Phasenverschiebungsvorrichtung in dem einkaskadigen MZI 61-1 die Phase $\varphi_{61-1}$ geändert werden:

$$\varphi^*_{61-1} \rightarrow \varphi_{61-1} + \delta\varphi_{61-1}, \text{ wobei } \delta\varphi_{61-1} = \pm\pi.$$

Die Nutzung der integraloptischen Technologien zur Herstellung ist ein entscheidender Faktor dafür, dass der erfindungsgemäße steuerbare optische Multiplexer die nötige Widerstandsfähigkeit gegenüber äußeren Einflüssen, eine große Zahl an Bahnen und eine hohe Wirkungsgeschwindigkeit hat. Die Nutzung vereinheitlichter E-lementtypen bei der Konstruktion - von einkaskadigen und/oder zweikaskadigen und/oder Multikaskaden-MZI - ermöglicht es, automatisierte technische Operationen zu verwenden, was gute technische Eigenschaften und entsprechend niedrige Fertigungskosten der Multiplexer ermöglicht.

Die Diskussion der Beispiele erläutert das Wirkungsprinzip, die Eigenschaften und mögliche Konstruktionsvarianten der Erfindung. Dem Fachmann für faseroptische Kommunikationssysteme wird klar sein, dass im Rahmen der Erfindung andere Abwandlungen und alternative Varianten der konstruktiven Ausführung des erfindungsgemäßen steuerbaren optischen Multiplexers möglich sind, ohne dass vom Schutzbereich der Ansprüche abgewichen wird.

**Gewerbliche Anwendbarkeit**

Das erfindungsgemäße Verfahren des steuerbaren Multiplexierens mit Hilfe des erfindungsgemäßen steuerbaren optischen Multiplexers kann in faseroptischen Leitungen und Kommunikationssystemen mit Spektralverdichtung der Bahnen verwendet werden, darunter in Hauptkommunikationsleitungen, in denen DWDM-Technologie angewandt wird, und in regionalen, städtischen und lokalen Kommunikationssystemen, in denen CWDM-Technologie angewandt wird.

Der erfindungsgemäße steuerbare optische Multiplexer kann mit Hilfe bestehender integraloptischer Technologie ausgeführt werden.

**Patentansprüche**

1. Verfahren zum gesteuerten Multiplexieren von Bahnen in einem faseroptischen Kommunikationssystem mit spektraler Verdichtung von $2^N$ Bahnen, deren optische Frequenzen bei einem konstanten Spektralintervall zwischen benachbarten Bahnen $\Delta v$ geändert werden können, wobei:

   (a) $2^N$ Bahnen jeweils einzeln zu $2^N$ Eingängen einer N-stufigen Struktur des "Baum"-Typs geführt werden, die in jeder n-ten Stufe, bei n = 1, 2, ..., N, $2^{N-n}$ optische Filter aufweist, die zwei Eingänge und wenigstens einen Ausgang aufweisen und die so ausgebildet sind, dass sie eine gesteuerte Änderung der Transmissionsfaktoren ermöglichen und durch ein Frequenzintervall zwischen benachbarten Extremen bei Abhängigkeit der Transmissionsfaktoren von der Frequenz $\Delta v_n = 2^{n-1}\Delta v$ **gekennzeichnet** sind, und wobei jeder der beiden Eingänge jedes optischen Filters der ersten Stufe als Eingang der N-stufigen Struktur dient;

   (b) der optische Filter jeder Stufe so eingestellt ist, dass für die optische Frequenz jeder der $2^N$ Bahnen die Transmissionsfaktoren von einem der $2^N$ Eingänge der N-stufigen Struktur zum Ausgang den höchsten Wert haben;

   (c) ein optisches Mehrbahnsignal durch die N-stufige Struktur durchgelassen wird und am Ausgang des optischen Filters der letzten Stufe ein optisches Mehrbahnsignal erhalten wird.

2. Steuerbarer optischer Multiplexer zur Verwendung in faseroptischen Netzen mit Spektralverdichtung von $2^N$ Bahnen, deren optische Frequenzen bei konstantem Spektralintervall zwischen benachbarten Bahnen $\Delta v$ geändert werden können, der $2^N$ Eingangsporte [(66-1), ..., (66-8)] und einen Ausgangsport (65) aufweist und Folgendes umfasst:

   - eine N-stufige Struktur (60) des "Baum"-Typs, die in jeder n-ten Stufe, bei n = 1, 2,...N, $2^{N-n}$, optische Filter [(61-1), ..., (61-4); (62-1), (62-2); 63] umfasst, die so ausgebildet sind, dass sie eine gesteuerte Änderung der Transmissionsfaktoren ermöglichen, und die in der n-ten Stufe durch ein Frequenzintervall zwischen benachbarten Extremen bei Abhängigkeit der Transmissionsfaktoren von der Frequenz $\Delta v_n = 2^{N-n}\Delta v$ **gekennzeichnet** sind und zwei Eingänge [a, b oder g, h] und wenigstens einen Ausgang [c oder e oder k] aufweisen;
   - eine Steuerungsvorrichtung (68) zur Steuerung der Änderung der Transmissionsfaktoren der Filter [(61-1), ..., (61-4); (62-1), (62-2); 63].

3. Multiplexer nach Anspruch 2, **dadurch gekennzeichnet, dass** bei der mehrstufigen Struktur:

   - zwei Eingänge [a, b oder g, h] jedes optischen Filters der ersten Stufe mit einem der Eingangsporte [(66-1), ..., (66-8)] verbunden sind;
   - die optischen Filter [(62-1), (62-2); 63] in jeder Stufe außer der ersten durch jeden der zwei Eingänge [a, b; g, h] mit dem Ausgang [c, e] eines der optischen Filter der vorigen Stufe verbunden sind;

- der Ausgang [k] des optischen Filters (63) der letzten Stufe mit dem Ausgangsport (65) verbunden ist.

4. Multiplexer nach Anspruch 2, **dadurch gekennzeichnet, dass** die optischen Filter [(61-1), ..., (61-4); (62-1), (62-2); 63] der N-stufigen Struktur einkaskadige (10) und/oder zweikaskadige (30) und/oder multikaskadige (50) asymmetrische Mach-Zehnder-Interferometer sind.

5. Multiplexer nach einem der Ansprüche 1 bis 4, **dadurch gekennzeichnet, dass** zur Steuerung der Einstellung der Transmissionsfaktoren die optischen Filter [(61-1), ..., (61-4); (62-1), (62-2); 63] elektrooptische oder thermooptische Phasenverschiebungsvorrichtungen [15; 37; 38] umfassen.

6. Multiplexer nach Anspruch 2, **dadurch gekennzeichnet, dass** er in integraloptischer Technologie auf einem Chip hergestellt ist.

7. Multiplexer nach Anspruch 2, bei dem alle Eingangsporte [(66-1), ..., (66-8)] und der Ausgangsport (65) mittels Lichtleitern ausgebildet sind.

**Fig. 1A**

**Fig. 1B**

**Fig. 2**

Fig. 3A

Fig. 3B

Fig. 4

50

52

51

Eingang →
(ungerade
Bahnen)

g

54

| a | e |
| b | f |
(I)

Eingang →
(gerade
Bahnen)

h

| a | e |
| b | f |
(II)

| a | e |
| b | f |
(I')

k → Ausgang
(alle Bahnen)

53

**Fig. 5A**

| MZI-3 | |
|---|---|
| g | k |
| h | |

**Fig. 5B**

Fig. 6

## INTERNATIONAL SEARCH REPORT

| International application No. |
| --- |
| PCT/RU 2005/000611 |

A.   CLASSIFICATION OF SUBJECT MATTER   *H04J 14/02   (2006.01)*

According to International Patent Classification (IPC) or to both national classification and IPC

B.   FIELDS SEARCHED

Minimum documentation searched (classification system followed by classification symbols)
H04J 14/00, 14/02, H04B 10/00, 10/02. 10/04. 10/06. 10/08. 10/12, 10/24, G02B 6/00, 6/24, 6/26, 6/28, 6/293, 6/35

Documentation searched other than minimum documentation to the extent that such documents are included in the fields searched

Electronic data base consulted during the international search (name of data base and, where practicable, search terms used)
RUPAT, RUABRU, RUPAT OLD, RUABU1, Esp@cenet, PAJ, USPTO DB

C.   DOCUMENTS CONSIDERED TO BE RELEVANT

| Category* | Citation of document, with indication, where appropriate, of the relevant passages | Relevant to claim No. |
| --- | --- | --- |
| A | US 2003/0053747 A1 (ROBERT H. CORMACK) 20.03.2003 | 1-7 |
| A | RU 2106065 C1 (SIMENS AG), 27.02.98 | 1-7 |
| A | RU 2260823 C2 (OOO "JUNIK AI SIZ"), 20.09.2005 | 1-7 |
| A | DE 4402831 A1 (FUJITSU LTD.) 08.12.1994 | 1-7 |

☐ Further documents are listed in the continuation of Box C.   ☐ See patent family annex.

| | |
| --- | --- |
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 24 July 2006  (24.07.2006) | 10 August 2006 (10.08.2006) |
| Name and mailing address of the ISA/    **RU** | Authorized officer |
| Facsimile No. | Telephone No. |

Form PCT/ISA/210 (second sheet) (July 1998)

**IN DER BESCHREIBUNG AUFGEFÜHRTE DOKUMENTE**

**In der Beschreibung aufgeführte Patentdokumente**

- US 6795654 B2
- US 6782158 B
- US 6782158 B2

**In der Beschreibung aufgeführte Nicht-Patentliteratur**

- **M. BORN ; E. WOLF.** The Optic Base. Pergamon Press, 1975, 312-316
- **M. BORN ; E. WOLF.** Osnovy optiki. *übersetzt unter der Redaktion,* 1970, 342-346